# EUROPÄISCHE PATENTANMELDUNG

(11) **EP 3 434 982 A1**
(43) Veröffentlichungstag der Anmeldung: **30.01.2019**
(21) Anmeldenummer: 18172196.0
(22) Anmeldetag: 14.05.2018
(51) Int. Cl.: F24D 3/14, F24D 3/12

(54) **FLÄCHENTEMPERIERMODUL**

(30) Priorität: 28.07.2017 DE 102017117196
(71) Anmelder: Sieberer, Josef, 6346 Niederndorferberg (AT)
(72) Erfinder: Sieberer, Josef, 6346 Niederndorferberg (AT)
(74) Vertreter: Müller, Jochen

(57) **Zusammenfassung**

Ein Flächentemperiermodul umfasst ein mäanderförmig angeordnetes Temperierelement (6), dessen Anschlüsse randseitig ins Freie ragen, wobei das Temperierelement (6) in eine Nut (4) in einem Plattenelement (3) aus einem Holzwerkstoff eingelegt und die Nut (4) mit einem Wärmeleitwerkstoff (9) gefüllt ist.

## Beschreibung

Die Erfindung bezieht sich auf ein Flächentemperiermodul mit einem mäanderförmig angeordneten Temperierelement.

Beim Neubau moderner Häuser werden häufig Wärmepumpen in die Heiz- bzw. Temperieranlagen integriert, wobei die Wärmeabgabe über eine Fußboden- oder Wandheizung erfolgt, da diese Heizungen mit einer relativ geringen Vorlauftemperatur betrieben werden. Bei der Fußbodenheizung erweist sich deren durch die große temperierte Masse bedingte Trägheit bei einer Temperaturänderung als nachteilig. Eine Wandheizung reagiert dagegen schneller auf erforderliche Temperaturänderungen und sorgt in relativ kurzer Zeit für eine angenehme Raumtemperatur. Als problematisch erweist sich jedoch die lange Trockenzeit des die Wandheizung überdeckenden Putzes und die beim Trocknen des Putzes auftretende Feuchtigkeit. Um diese Nachteile zu vermeiden, sind vorgefertigte Wandelemente mit integrierter Wandheizung bekannt.

Aus der DE 43 40 521 A1 ist ein Heizelement mit einer eine von einer Heizflüssigkeit durchströmten Heizleitung aufnehmenden Ummantelung bekannt. Die Ummantelung ist aus einem leitenden, nicht metallischen und Spannungen aufnehmenden Werkstoff hergestellt, in den die Heizleitung ganzflächig eingebettet ist. Der Werkstoff, in den die Heizleitung eingebettet ist, ist eine Mischung aus Schamottgranulat, Blähton und Zement. Zu beiden Seiten des Heizelementes sind Armierungen vorgesehen, die aus einer Gewebematte aus Kunststoff ausgebildet ist.

Aus der DE 30 08 610 A1 ist eine Dach-, Wand- oder Bodenplatte aus Beton oder Ton bekannt, in die dünnwandige Kunststoffrohre für ein Wärmeträgermedium eingebettet sind.

Bei der aus der AT 403 396 B bekannten Klimaplatte sind von einem Wärmeträgermedium durchströmte Leitungen in eine Schicht aus Mörtel oder Kunstharz eingebettet. Zur Verbesserung der Wärmeleitfähigkeit sind Metallfasern in den Mörtel bzw. das Kunstharz eingemischt.

Die DE 199 20 081 A1 beschreibt ein Wandelement für ein Gebäude mit einem integrierten Kühl- bzw. Heizregister, das mit einem zentralen Temperiersystem verbunden und in eine wärmeleitende Ausgussmasse eingebettet ist, wobei die Ausgussmasse ein mit Sand, Strohhäcksel und Wasser aufbereiteter Lehm ist. In die gegenüberliegenden großflächigen Außenflächen des Wandelementes ist jeweils ein Gewebe in die Ausgussmasse eingelegt.

Im Weiteren ist aus der DE 20 2013 001 756 U1 ein Fertigbauelement bekannt, das wenigstens ein erstes Massivholzelement, das in einer Aufnahmeseite wenigstens eine kanalartige Aufnahmeaussparung hat, und ein zweites Massivholzelement enthält, das die kanalartige Aufnahmeaussparung des ersten Massivholzelementes überdeckend mit einer Gegenseite gegen die Aufnahmeseite des ersten Massivholzelementes anliegt und mit dem ersten Massivholzelement leimfrei durch gleichzeitig in beide Massivholzelemente eingreifende Massivholzdübel fest verbunden ist, wobei in der wenigstens einen kanalartigen Aufnahmeaussparung eine Speicherleitung eines Wärme/Kältespeichers untergebracht ist. Dieses Fertigbauelement ist insofern problematisch, als die Speicherleitung relativ gut wärmeisoliert zwischen den beiden Massivholzelementen aufgenommen ist, wodurch ein Wärmeaustausch, insbesondere mit Raumluft, erschwert ist.

Darüber hinaus beschreibt die EP 2 390 433 A1 ein Fertigbauelement mit zwei flächigen Außenseiten sowie einer ersten und einer zweiten Schicht, die fest miteinander verbunden sind, wobei mindestens eine der Schichten auf der der anderen der Schichten zugewandten Seite wenigstens eine Funktionsausnehmung aufweist, die zumindest zu einer der beiden flächigen Außenseiten beabstandet liegt und frei von einer Verbindungsfunktion zwischen den beiden Schichten ist.

Der Erfindung liegt die Aufgabe zugrunde, ein Flächentemperierelement der eingangs genannten Art zu schaffen, das in einem relativ hohen Grad vorfertigbar, verhältnismäßig robust und leicht montierbar ist und dabei einerseits eine wärmeisolierende Seite und anderseits eine wärmedurchlässige Seite aufweist.

Erfindungsgemäß wird die Aufgabe durch die Merkmale des unabhängigen Anspruchs gelöst.

Die Unteransprüche stellen vorteilhafte Ausgestaltungen der Erfindung dar.

Ein Flächentemperiermodul umfasst ein mäanderförmig angeordnetes Temperierelement, dessen Anschlüsse randseitig ins Freie ragen, wobei das Temperierelement in eine Nut in einem Plattenelement aus einem Holzwerkstoff eingelegt und die Nut mit einem Wärmeleitwerkstoff gefüllt ist.

Das Flächentemperiermodul nach der Erfindung ist vorrangig zur Befestigung an einer Wand oder Decke eines Gebäudes geeignet, wobei eine Verwendung im Fußbodenbereich nicht ausgeschlossen ist.

Das Flächentemperiermodul ist als Einzelmodul in unterschiedlichen Größen vorzufertigen, wobei in das aus einem Holzwerkstoff bestehende Plattenelement eine mäanderförmige Nut gefräst wird, die in ihrer Breite und Tiefe zur Aufnahme des Temperierelementes an dessen Maße angepasst ist. Das Temperierelement wird klemmend in die Nut eingelegt und anschließend wird die Nut mit einem Wärmeleitwerkstoff gefüllt. Sonach weist das Flächentemperiermodul auf der einen Seite, in die keine Nur eingearbeitet ist und die zur Anordnung auf einer Gebäudewand oder Raumdecke vorgesehen ist, eine gute Wärmedämmung und auf der gegenüberliegenden Seite, die mit der Nut und dem Wärmeleitwerkstoff versehen und der Rauminnenseite zuzuordnen ist, eine gute Wärmeleitung auf, um von dem Temperierelement zur Erwärmung eines Raums Wärme an die Umgebung abzugeben oder zum Kühlen eines Raums Wärme aus der Umgebung zu dem Temperierelement zu leiten und abzuführen. Aufgrund des Wärmeleitwerkstoffs, der lediglich in Bereich der Nut vorgesehen ist, ist die Nut bzw. deren Verlauf optisch gut erkennbar, weshalb eine Beschädigung des Temperierelementes, beispielsweise durch das Einbringen von Befestigungsbohrungen in ungeeigneten Bereichen, vermieden ist. Im Weiteren ist das Temperierelement mittels des Wärmeleitwerkstoffs in der Nut unverlierbar fixiert. Aufgrund der Formstabilität des Plattenelementes kann dasselbe eine relativ geringe Dicke aufweisen, beispielsweise zwischen 20 und 60 mm, vorzugsweise zwischen 30 und 50 mm und bevorzugt etwa 40 mm. Die Nut kann einen im Wesentlichen U-förmigen oder V-förmigen oder T-förmigen Querschnitt aufweisen.

Bevorzugt ist das Plattenelement als eine Holzweichfaserplatte ausgebildet. Holzweichfaserplatten werden auch als Holzfaserdämmplatten oder Weichholzfaserplatten bezeichnet und werden in der Regel zur Wärmedämmung eines Gebäudes eingesetzt.

In Ausgestaltung umfasst der Wärmeleitwerkstoff Lehm und Graphit. Der Lehm wird mit Graphit vermischt und mittels einer Spachtel in die Nut eingebracht.

Durch die Verwendung von Graphit ist die Wärmeleitfähigkeit des Lehms wesentlich gesteigert.

Die Nut ist als eine T-Nut ausgeführt und der die T-Nut füllende Wärmeleitwerkstoff schließt bündig mit der Oberfläche des Plattenelementes ab. Sonach steht eine relativ große Fläche des Wärmeleitwerkstoffs an der Oberfläche des Plattenelementes zur Wärmeübertragung zur Verfügung und der Wärmeleitwerkstoff wirkt sich nicht störend bei der weiteren Oberflächenbeschichtung mit Lehm aus. Die bauseitig aufgetragenen Lehmschichten sind relativ dünn und im Fall des bündig mit der Oberfläche des Plattenelementes aufgetragenen bzw. in die Nut gespachtelten Wärmeleitwerkstoffs sind diese in ihrer Dicke gleichmäßig auftragbar und sind nach dem Trocknen eben und erscheinen nicht wellig.

Um die Fläche zur Wärmeübertragung, die im Wesentlichen auf die Breite und Länge der Nut beschränkt ist, zu vergrößern, erstreckt sich vorzugsweise der der Wärmeleitwerkstoff beidseitig der Nut auf der Oberfläche des Plattenelementes. Im Fußbereich kann die Nut an das Temperierelement angepasst sein, das ohne einen Luftspalt unmittelbar in der Nut einliegt. Es ist auch möglich, die Nut in ihrem Fußbereich mit einer Schicht Wärmeleitwerkstoff zu versehen, in die das Temperierelement eingebettet wird, wobei der Wärmeleitwerkstoff eine Wärmeleitung in Richtung der Oberfläche des Plattenelementes bewirkt, in die die Nut eingelassen ist.

Zur Fertigung einer dekorativen Oberfläche, die keine Übergänge zwischen nebeneinander angeordneten Flächentemperiermodulen erkennen lässt, ist das Plattenelement mit einem Armierungsgewebe und Lehm beschichtbar. Zweckmäßigerweise ist das Armierungsgewebe als ein Glasgewebe ausgebildet. Diese Beschichtung wird üblicherweise nach der Montage der Flächentemperiermodule in dem Gebäude aufgetragen, so dass alle Spalten überdeckt sind und eine ebene Oberfläche, die mit einem Putz und/oder mit Farbe versehen werden kann, bereitgestellt ist. Die Armierungsschicht mit den in den Lehm eingebetteten Glasgewebe nimmt auch Spannungen auf und verhindert Risse.

In Ausgestaltung ist die Fläche des Plattenelementes, die keine Nut aufweist, mit einer Mischung aus Schäben und Lehm beschichtet. Die keine Nut aufweisende Fläche ist im montierten Zustand des Flächentemperiermoduls der Gebäudewandung zugeordnet. Die Mischung aus Schäben und Lehm, also ein mit Schäben versetzter Lehmputz wird sich günstig auf die Schall- und Wärmedämmung auf. Der die Schäben aufweisende Lehmputz kann entweder bereits bei der Vorfertigung der Flächentemperiermodule oder bei deren Montage an der Gebäudewand aufgetragen werden. Wird der Lehmputz bei der Montage aufgebracht, sichert er eine vollflächige Kontaktierung zu der Gebäudewand bei einer entsprechenden Dicke des Lehmputzes.

Als Schäben werden die gebrochenen, holzähnlichen Teilchen bezeichnet, die bei der Erzeugung von Flachs- oder Hanffasern im maschinellen Prozess der Entholzung des Pflanzenstängels anfallen. Schäben entstammen der holzigen Kernröhre des Stängels, der von den Fasern umgeben ist. Hanfschäben können bis zum Vierfachen ihres Eigengewichts an Feuchtigkeit aufnehmen und sind leicht kompostierbar. Im Vergleich zu anderen natürlichen Faserstoffen zeichnen sich Schäben durch ein geringes Gewicht, eine hohe Porosität und damit hohe Dämmwirkung sowie eine hohe Elastizität aus.

Nach einer Weiterbildung ist das Temperierelement als eine Rohrleitung ausgebildet, deren mit einem Vorlauf und einem Rücklauf verbindbare Enden nebeneinander angeordnet aus dem Plattenelement herausragen. Die Rohrleitung kann aus einem Sandwichmaterial, das Kunststoff- und Metallschichten umfasst, gefertigt und an ein wasserführendes System einer Heizungsanlage oder einer Klimatisierungsanlage angeschlossen werden. Während die Heizungsanlage zum Heizen dient, kann die Klimatisierungsanlage zum Heizen und Kühlen oder nur zum Kühlen mit entsprechend temperierter Flüssigkeit ausgebildet sein.

Zweckmäßigerweise ist die Rohrleitung kraftschlüssig in der Nut gehalten. Der Kraftschluss muss nicht über die gesamte Länge der Nut erzielt werden, es genügt eine Anlage im Bereich bogenförmiger Abschnitte der Nut, um die Rohrleitung zu fixieren.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:
- Fig. 1: eine Draufsicht auf das Flächentemperiermodul nach der Erfindung
- Fig. 2: eine Schnittdarstellung gemäß der Linie II-II nach Fig. 1
- Fig. 3: eine vergrößerte Darstellung der Einzelheit III gemäß Fig. 2 und
- Fig. 4: eine vergrößerte Darstellung der Einzelheit III gemäß Fig. 2 in alternativer ausgestaltung..

Das Flächentemperiermodul 1 umfasst ein aus einer Holzweichfaserplatte 2 bestehendes Plattenelement 3, in die eine mäanderförmige Nut 4 eingefräst ist, die geradlinig parallel und bogenförmige Abschnitte in ihrem Verlauf aufweist. In die Nut 4 ist ein als eine Rohrleitung 5 ausgebildetes Temperierelement 6 eingesetzt. Die Rohrleitung 5 ist kraftschlüssig klemmend in der Nut 4 gehalten, wobei die Tiefe der Nut 4 größer als der Durchmesser der Rohrleitung 5 bemessen ist. Die Rohrleitung 5 ist mit einem Vorlauf 7 und einem Rücklauf 8 aus dem Plattenelement 3 herausgeführt, um mit einem wasserführenden Kreislauf gekoppelt zu werden, wobei der Kreislauf bei Anschluss an eine Wärmequelle zum Heizen und bei Anschluss an eine Wärmesenke zum Kühlen dienen kann.

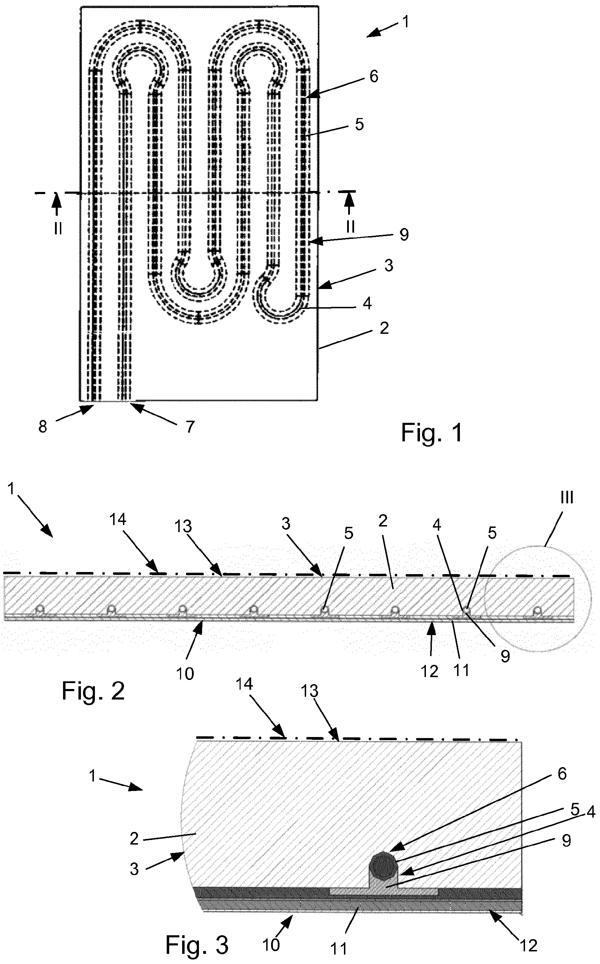

Die Nut 4 ist mit einem aus Lehm und Graphit bestehenden der Wärmeleitwerkstoff 9 gefüllt, der an der Rohrleitung 5 anliegt und sich gemäß Fig. 3 in einem Streifen, der breiter als die Nut 4 bemessen ist, auf der Oberfläche 10 des Plattenelementes 3 erstreckt, die im montierten Zustand einer Rauminnenseite zugewandt ist.

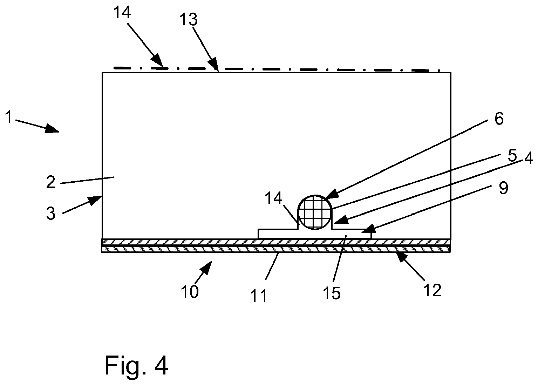

Nach Fig. 4 ist die Nut 4 T-förmig und in dem Steg 14 liegt die Rohrleitung 5 ein. Der Flansch 15 der T-förmigen Nut bildet eine parallel zur Oberfläche 10 des Plattenelementes 3 ausgerichtete Vertiefung. Die Nut 4 ist komplett mit dem Lehm und Graphit umfassenden der Wärmeleitwerkstoff 9 gefüllt, der sich an die Rohrleitung 5 anschmiegt und oberseitig bündig mit der Oberfläche 10 des Plattenelementes 3 abschließt.

Die der Rauminnenseite zugewandte Oberfläche 10 des Plattenelementes ist mit einem Lehm 11 beschichtet, in den ein als ein Glasgewebe ausgebildetes Armierungsgewebe 12 eingebettet ist. Die der armierten Oberfläche 10 gegenüberliegende Fläche 13 des Plattenelementes 3, die im montierten Zustand einer Gebäudewand zugewandt ist, ist mit einer Mischung 14 aus Schäben und Lehm beschichtet, die eine Schalldämmung verbessert.

Das Flächentemperiermodul 1 lässt sich unter Verwendung von Klemmelementen und/oder Schrauben beispielsweise auf eine Holzkonstruktion eines Gebäudes befestigen. Zur Anordnung auf einer gemauerten Wand oder einem bestehenden Putz, insbesondere bei einer Gebäudesanierung, wird zunächst auf die Gebäudewand eine entsprechende Lehmgrundierung aufgetragen und anschließend entweder ein Lehmkleber oder die Mischung 14 aus Schäben und Lehm auf das Plattenelement 3 auf der den Nuten 4 gegenüberliegenden Fläche 13 aufgebracht und das Plattenmodul 3 an die zu bestückende Gebäudewand angepresst. Zur Verbesserung der Befestigung können Schlagdübel verwendet werden, die Bohrungen des Flächentemperiermoduls 1 durchragen und in gebäudewandseitige Bohrungen eintauchen. Selbstverständlich kann das Flächentemperiermodul 1 auch an einer Decke angebracht werden.

Zum Verputzen werden die Flächentemperiermodule 1 von Staub befreit und größere Spalte werden mit einem Lehm oder einem Armierungsmörtel ausgespachtelt. Anschließend wird die Oberfläche 10 mit Lehm überzogen und in den noch nassen Lehm wird das Glasgewebe oder Glasseidengewebe eingearbeitet, wobei sich die Abschnitte des Armierungsgewebes 12 überlappen. Nach Trocknung des armierten Lehms kann ein Oberputz aufgetragen werden, der auch farbig angelegt werden kann.

### Bezugszeichen

- 1.: Flächentemperiermodul
- 2.: Holzweichfaserplatte
- 3.: Plattenelement
- 4.: Nut
- 5.: Rohrleitung
- 6.: Temperierelement
- 7.: Vorlauf
- 8.: Rücklauf
- 9.: Wärmeleitwerkstoff
- 10.: Oberfläche
- 11.: Lehm
- 12.: Armierungsgewebe
- 13.: Fläche
- 14.: Mischung
- 15.: Steg
- 16.: Flansch

## Patentansprüche

1. Flächentemperiermodul mit einem mäanderförmig angeordneten Temperierelement (6), dessen Anschlüsse randseitig ins Freie ragen, wobei das Temperierelement (6) in eine Nut (4) in einem Plattenelement (3) aus einem Holzwerkstoff eingelegt und die Nut (4) mit einem Wärmeleitwerkstoff (9) gefüllt ist.

2. Flächentemperiermodul nach Anspruch 1, **dadurch gekennzeichnet, dass** das Plattenelement (3) als eine Holzweichfaserplatte (2) ausgebildet ist.

3. Flächentemperiermodul nach Anspruch 1, **dadurch gekennzeichnet, dass** der Wärmeleitwerkstoff (9) Lehm und Graphit umfasst.

4. Flächentemperiermodul nach einem der Ansprüche 1 bis 3, **dadurch gekennzeichnet, dass** die Nut (4) als eine T-Nut ausgeführt ist und der die T-Nut füllende Wärmeleitwerkstoff (9) bündig mit der Oberfläche (10) des Plattenelementes (3) abschließt.

5. Flächentemperiermodul nach einem der Ansprüche 1 bis 4, **dadurch gekennzeichnet, dass** sich der der Wärmeleitwerkstoff (9) beidseitig der Nut (4) auf der Oberfläche (10) des Plattenelementes (3) erstreckt.

6. Flächentemperiermodul nach einem der Ansprüche 1 bis 5, **dadurch gekennzeichnet, dass** das Plattenelement (3) mit einem Armierungsgewebe (12) und Lehm (11) beschichtbar ist.

7. Flächentemperiermodul nach Anspruch 6, **dadurch gekennzeichnet, dass** das Armierungsgewebe (12) als ein Glasgewebe ausgebildet ist.

8. Flächentemperiermodul nach Anspruch 1, **dadurch gekennzeichnet, dass** die Fläche (13) des Plattenelementes (3), die keine Nut (4) aufweist, mit einer Mischung (14) aus Schäben und Lehm beschichtet ist.

9. Flächentemperiermodul nach Anspruch 1, **dadurch gekennzeichnet, dass** das Temperierelement (6) als eine Rohrleitung (5) ausgebildet ist, deren mit einem Vorlauf (7) und einem Rücklauf (8) verbindbare Enden nebeneinander angeordnet aus dem Plattenelement (3) herausragen.

10. Flächentemperiermodul nach Anspruch 9, **dadurch gekennzeichnet, dass** die Rohrleitung (5) kraftschlüssig in der Nut (4) gehalten ist.
